# EUROPÄISCHE PATENTSCHRIFT

(11) **EP 2 231 958 B1**
(45) Veröffentlichungstag und Bekanntmachung des Hinweises auf die Patenterteilung: **12.03.2014**
(21) Anmeldenummer: 08857893.5
(22) Anmeldetag: 27.11.2008
(51) Int. Cl.: C04B 41/52, E04F 13/04

(54) **VERFAHREN ZUM AUFBRINGEN EINER BESCHICHTUNG AUF EINE ZU BESCHICHTENDE FLÄCHE UND BESCHICHTUNG MIT EINER MEHRZAHL VON SCHICHTEN**
METHOD FOR APPLYING A COATING TO A SURFACE TO BE COATED, AND COATING HAVING A PLURALITY OF LAYERS
PROCÉDÉ D'APPLICATION D'UN REVÊTEMENT SUR UNE SURFACE À REVÊTIR ET REVÊTEMENT COMPORTANT PLUSIEURS COUCHES

(30) Priorität: 03.12.2007 DE 102007058415; 03.12.2007 DE 202007018311 U
(43) Veröffentlichungstag der Anmeldung: 29.09.2010
(73) Patentinhaber: Rohde KG, 91083 Baiersdorf (DE)
(72) Erfinder: ROHDE, Karl-Heinz, 91083 Baiersdorf (DE)
(74) Vertreter: Eichstädt, Alfred
(86) Internationale Anmeldenummer: PCT/EP2008/066284
(87) Internationale Veröffentlichungsnummer: WO 2009/071482

(56) Entgegenhaltungen:
- EP-A- 1 380 709
- WO-A-03/035998
- DE-U1- 20 320 479
- DE-U1-202006 018 958

## Beschreibung

Die Erfindung betrifft ein Verfahren zum Aufbringen einer Beschichtung auf eine zu beschichtende Fläche. Weiterhin betrifft die Erfindung eine Beschichtung, die eine Mehrzahl von Schichten aufweist.

Aus der DE 197 47 131 A1 sind eine Wandbeschichtung zum Abschirmen elektromagnetischer Felder und ein Verfahren zur Herstellung einer derartigen Wandbeschichtung bekannt. Diese Wandbeschichtung weist eine Putzschicht und ein in die Putzschicht eingelagertes, eine Transmission elektromagnetischer Felder durch die Putzschicht hemmendes elektrisch leitfähiges Material auf. Das elektrisch leitfähige Material enthält eine elektromagnetische Felder abschirmende Anordnung. Diese Wandbeschichtung wird hergestellt, indem zunächst eine innere Putzlage auf einen Untergrund aufgetragen, dann die elektromagnetische Felder abschirmende Anordnung von Metalldrähten auf die Oberfläche der inneren Putzlage aufgebracht und anschließend eine äußere Putzlage auf die mit der Metalldrahtanordnung versehene Oberfläche der inneren Putzlage aufgetragen wird.

Aus der DE 102 19 127 A1 sind ein Substrat mit einer biofilm-hemmenden Beschichtung, ein Verfahren zur Herstellung eines Substrats mit einer biofilm-hemmenden Beschichtung und eine Beschichtungszusammensetzung bekannt. Diese Beschichtung enthält ein mit organischen Gruppen modifiziertes anorganisches Kondensat, wobei zumindest ein Teil der organischen Gruppen des Kondensats Fluoratome aufweist und Kupfer- oder Silberkolloide in der Beschichtung enthalten sind. Bei einer derartigen Beschichtung der Oberfläche eines Substrats wird eine Bildung eines Biofilms auf dem Substrat gehemmt oder gänzlich vermieden.

Aus der DE 20 2005 005 208 U1 ist ein textiles Flächengebilde zur Verwendung als Wandbekleidung bekannt. Das textile Flächengebilde weist einen mineralfreien Faservliesstoff auf und ist mit einer selbsthaftenden Beschichtung versehen. Der Faservliesstoff ist aus Naturfasern oder einer Mischung aus Naturfasern und verrottbaren synthetischen Fasern gebildet. Die selbsthaftende Beschichtung ist rückseitig in Form von Klebepunkten aufgebracht. Eine derartige Wandbekleidung kann trocken verlegt werden. Es wird kein Nasskleber benötigt und ein Auftragen eines Klebers auf die Wand ist nicht notwendig.

Aus der EP A-1 380 709 ist ein Verfahren zum Aufbringen einer Beschichtung auf eine zu beschichtende Fläche mit folgenden Schritten, bzw. eine Beschichtung, bekannt: grundieren der zu beschichtenden Fläche mit einer Haftgrundierung, einlegen eines Glasgewebe, Spachtelmasse anbringen, aufbringen eines Primers und überstreichen mit einem Schlussanstrich.

Heutzutage werden in vielen Lebensbereichen hohe Anforderungen an die Hygiene gestellt. Dies gilt insbesondere im Gesundheitswesen, beispielsweise in Krankenhäusern, Diagnostik- und Behandlungszentren, Forschungslabors, Operationsbereichen, Arzt- und Zahnarztpraxen. Dies gilt auch in der Industrie in allen Bereichen mit Reinraumbedingungen, beispielsweise in der Pharmaindustrie, der Lebensmittelindustrie, der Getränkeindustrie, sowie in Hotels, Restaurants und Großküchen. Ferner werden beispielsweise in öffentlichen Toiletten hohe Anforderungen an die Hygiene gestellt. In allen diesen Bereichen ist sinnvoll und/oder notwendig, Wand- und Deckenflächen und ggf. auch Fußböden mit hygienischen Beschichtungen zu versehen.

Die Aufgabe der Erfindung besteht darin, ein Verfahren zum Aufbringen einer Beschichtung auf eine zu beschichtende Fläche anzugeben, mittels welchem eine hohen Anforderungen an die Hygiene erfüllende Beschichtung hergestellt werden kann.

Diese Aufgabe wird durch ein Verfahren, bzw. eine Beschichtung, mit den im Anspruch 1, bzw. Anspruch 8, angegebenen Merkmalen gelöst. Gemäß diesem Verfahren erfolgt ein Grundieren der zu beschichtenden Fläche, ein Aufbringen eines Klebers auf die grundierte Fläche, ein Einlegen von Glasgewebe in den aufgebrachten Kleber, ein Trocknen des Glasgewebes und des Klebers, ein Glattspachteln des getrockneten Glasgewebes mit einer Spachtelmasse, ein Glattschleifen der Spachtelmasse, ein Aufbringen eines Primers auf die geschliffene Spachtelmasse und ein Überstreichen des Primers mit einem Schlussanstrich.

Mittels des erfindungsgemäßen Verfahrens wird eine Beschichtung hergestellt, die eine Vielzahl von vorteilhaften Eigenschaften hat. Dazu gehören insbesondere die Glätte der Oberfläche der Beschichtung, die ein Festsetzen jeglicher Partikel auf der Beschichtung ausschließt, eine hohe Oberflächenhärte der Beschichtung, die zu einem wesentlichen Teil auf die verwendete Spachtelmasse zurückzuführen ist, ein hoher Haftabzugswert der Beschichtung, d. h. ein festes Haften der Beschichtung auf der beschichteten Fläche, und die Möglichkeit, eine Beschichtung gemäß der Erfindung auf einer Vielzahl verschiedenartiger, zu beschichtender Flächen aufzubringen. Dazu gehören beispielsweise Mauerwerk, Beton und betonartige Untergründe, Holz- und holzartige Substrate, Gips und gipsartige Substrate und metallische Wände.

Des Weiteren ist eine Beschichtung gemäß der Erfindung rissvermeidend und rissüberbrückend, desinfektionsmittelbeständig, dekontaminierbar und verhindert eine Besiedelung der beschichteten Oberfläche mit Keimen, Pilzen und Mikroorganismen.

Beim Grundieren wird auf die zu beschichtende Fläche eine Haftgrundierung aufgebracht, insbesondere eine lösungsmittelfreie Einkomponenten-Acryl-Haftgrundierung. Diese stellt sicher, dass die weiteren Schichten der Beschichtung fest an der zu beschichtenden Fläche anhaften.

Als Kleber besonders geeignet ist ein lösungsmittelfreier Glasgewebekleber, von welchem das in diesen eingelegte Glasgewebe nach einer Trocknung festgehalten wird.

Das Glasgewebe ist in vorteilhafter Weise ein gewebtes Glasgewebe mit einem Flächengewicht im Bereich von 100 g/m² bis 400 g/m². Glasgewebe mit einem derartigen Flächengewicht hat den Vorteil, dass die hohen Reißkoeffizienten zu einer guten Rissüberbrückung und Rissverhinderung führen. Zudem wird damit eine optimale Oberflächenfestigkeit in Verbindung mit maximaler Elastizität erzielt.

Als Spachtelmasse wird eine lösungsmittelfreie Zweikomponenten-Epoxy-Spachtelmasse verwendet. Die Spachtelmasse hat einen besonders hohen Festkörpergehalt bei gleichzeitigem geringem Volumenschwund bei der Trocknung, gute Schleifbarkeit und sehr gute Chemikalienbeständigkeit und Elastizität. Die Verwendung einer derartigen Spachtelmasse führt zu einer hohen Oberflächenhärte und einem hohen Haftabzugswert der Beschichtung.

Durch das Glattschleifen der Spachtelmasse wird die Voraussetzung dafür geschaffen, dass die gewünschte glatte Oberfläche der Beschichtung in ihrer Gesamtheit geschaffen wird.

Das anschließende Aufbringen eines Primers und eines Schlussanstrichs verbessert die Desinfektionsmittelbeständigkeit der Beschichtung und trägt dazu bei, dass eine Besiedelung der Beschichtung mit Mikroorganismen jeglicher Art verhindert wird.

Durch das zweimalige Auftragen des Schlussanstriches wird sichergestellt, dass die fertiggestellte Beschichtung emissionsfrei, kapillar- und porenfrei, zäh-elastisch, desinfektionsmittelbeständig nach DGHM und RKI, dekontaminierbar, UV-beständig, wetterbeständig und beständig gegen H₂O₂-Begasung ist.

Weitere vorteilhafte Eigenschaften der Erfindung ergeben sich aus deren beispielhafter Erläuterung anhand der Figuren. Es zeigt
- Figur 1: ein Flussdiagramm zur Veranschaulichung eines Verfahrens gemäß der Erfindung und
- Figur 2: eine Skizze zur Veranschaulichung des Aufbaus einer Beschichtung gemäß der Erfindung.

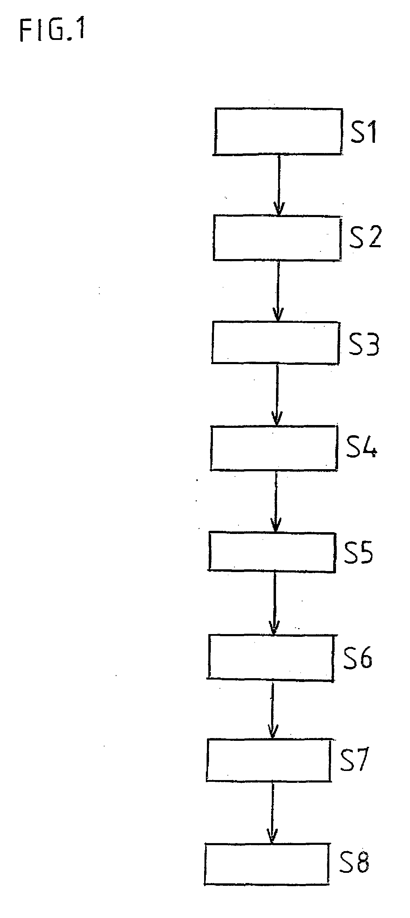

Die Figur 1 zeigt ein Flussdiagramm zur Veranschaulichung eines Verfahrens zum Aufbringen einer Beschichtung auf eine zu beschichtende Fläche. Bei dieser zu beschichtenden Fläche handelt es sich beispielsweise um eine Innenwand eines Operationssaals eines Krankenhauses oder um eine Innenwand eines Forschungslabors, d. h. um die Innenwand eines Bereiches, in welchem hohe Anforderungen an die Hygiene gestellt werden.

Zunächst erfolgt in einem Schritt S1 ein Grundieren der zu beschichtenden Fläche. Bei diesem Grundieren wird auf die zu beschichtende Fläche eine Haftgrundierung aufgebracht, vorzugsweise eine lösungsmittelfreie Einkomponenten-Acryl-Haftgrundierung. Durch diese Grundierung wird die Voraussetzung dafür geschaffen, dass die weiteren Schichten der aufzubringenden Beschichtung fest an der zu beschichtenden Fläche anhaften.

Danach wird in einem Schritt S2 Kleber auf die grundierte Fläche aufgebracht. Als Kleber wird ein lösungsmittelfreier Glasgewebekleber verwendet, der sich durch eine lange Verarbeitungszeit, hohes Standvermögen, feste Verankerung des Glasgewebes auf dem Untergrund, gute Benetzung des Glasgewebes und hohe Klebekraft auszeichnet.

Anschließend erfolgt im Schritt S3 ein Einlegen von Glasgewebe in den aufgebrachten Kleber. Bei dem Glasgewebe handelt es sich vorzugsweise um ein gewebtes Glasgewebe mit einem Flächengewicht im Bereich von 100 g/m² bis 400 g/m². Durch die Verwendung von derartigem Glasgewebe wird erreicht, dass die Beschichtung rissvermeidend und rissüberbrückend ist, was in Operationssälen und Forschungslabors von hoher Bedeutung ist.

Außerdem erreicht man damit mechanisch gut belastbare Flächen und sehr hohe Festigkeit bei gleichzeitig guter Elastizität.

Im nachfolgenden Schritt S4 erfolgt ein Trocknen des Glasgewebes und des Klebers. Dieses Trocknen kann ohne Verwendung von Trockenmitteln oder Trockengeräten bei Raumtemperatur erfolgen. Alternativ dazu kann das Trocknen auch dadurch beschleunigt werden, dass beispielsweise mittels eines Trockengerätes Luft geeigneter Temperatur auf die mit Kleber und Glasgewebe versehene Fläche geblasen wird.

Danach erfolgt im Schritt S5 ein Glattspachteln des getrockneten Glasgewebes mit einer Spachtelmasse. Als Spachtelmasse wird eine lösungsmittelfreie Zweikomponenten-Epoxy-Spachtelmasse verwendet. Das Aufbringen dieser Spachtelmasse schafft die Vorraussetzung dafür, dass die Beschichtung nach ihrer Fertigstellung eine hohe Oberflächenhärte aufweist, so dass die Wahrscheinlichkeit einer späteren Beschädigung der Beschichtung durch mechanische Einwirkungen, beispielsweise durch ein unerwünschtes Anstoßen mit einem Krankenbett an die Wand oder durch ein unerwünschtes Anstoßen eines Stuhles oder eines Tisches an die Wand, usw., stark reduziert ist. Des Weiteren wird durch das Aufbringen der Spachtelmasse erreicht, dass die Beschichtung nach ihrer Fertigstellung einen hohen Haftabzugswert aufweist. Messungen der Anmelderin haben ergeben, dass der Haftabzugswert HAW der Beschichtung Werte hat, für die gilt: HAW > 6. Die Haftung der Beschichtung auf dem Untergrund ist folglich sehr stark. Außerdem wird damit die Grundlage für die Chemikalienresistenz der gesamten Beschichtung gelegt. Durch die hohe Vernetzungsdichte wird ein Durchdiffundieren von Chemikalien, beispielsweise Desinfektionsmitteln, ausgeschlossen.

Im darauffolgenden Schritt S6 wird die Spachtelmasse glattgeschliffen, um die Voraussetzungen dafür zu schaffen, dass die Beschichtung nach ihrer Fertigstellung die gewünschte glatte Oberfläche aufweist. Dieses Glattschleifen erfolgt vorzugsweise mittels eines Vibrationsschleifers oder eines Exzenterschleifers.

Danach erfolgt im Schritt S7 ein Aufbringen eines Primers auf die geschliffene Spachtelmasse. Als Primer wird ein lösungsmittelfreier Zweikomponenten-PU-Voranstrich verwendet. Dieser Arbeitsschritt dient zur Haftvermittlung zwischen der Spachtelmasse und dem Schlussanstrich. Außerdem werden damit eventuell vorhandene Poren und Kapillaren verschlossen.

Im darauffolgenden Schritt S8 erfolgt ein Überstreichen des Primers mit einem Schlussanstrich. Dieser Schlussanstrich erfolgt durch ein zweimaliges Auftrage eines lösungsmittelfreien Zweikomponenten-PU-Anstrichs. Durch das zweite Auftragen wird dabei sichergestellt, dass die fertiggestellte Beschichtung kapillar- und porenfrei ist sowie die gewünschte glatte Oberfläche aufweist, die eine Besiedelung der Beschichtung mit Partikeln jeglicher Art verhindert. Des Weiteren ermöglicht dies eine problemlose Desinfektion und Dekontaminierbarkeit. Nach einer Trocknung erhält man einen zähelastischen Anstrichfilm mit hoher Belastbarkeit.

Mittels des vorstehend beschriebenen Verfahrens wird auf einer zu beschichtenden Fläche, bei der es sich insbesondere um eine Innenwand oder eine Decke eines Raumes mit hohen Hygieneanforderungen handelt, eine hygienische und fugenlose Wandbeschichtung hergestellt, welche die Vorteile einer Verwendung von Glasgewebe und eines desinfektionsmittelbeständigen Schlussanstrichs aufweist und darüber hinaus auch wegen ihrer glatten und fugenlosen Oberfläche eine Besiedelung der beschichteten Fläche mit Keimen, Pilzen und Mikroorganismen verhindert und des Weiteren eine hohe Oberflächenhärte und einen hohen Haftabzugswert aufweist.

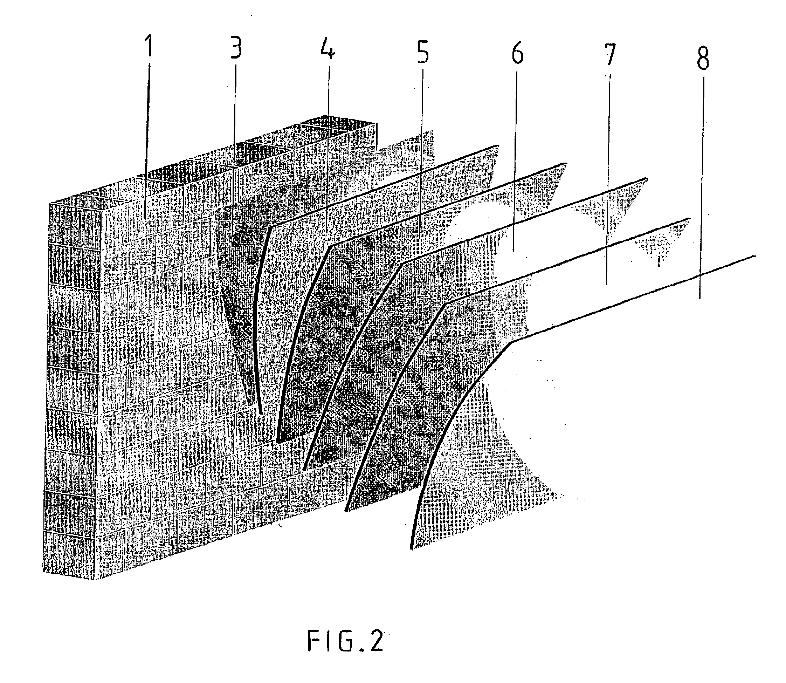

Die Figur 2 zeigt eine Skizze zur Veranschaulichung des Aufbaus einer Beschichtung gemäß der Erfindung. In der Figur 2 ist eine beschichtete Fläche 1 gezeigt, die mit einer Beschichtung versehen ist. Diese Beschichtung weist eine Mehrzahl von Schichten auf, wobei eine erste Schicht eine Grundierung 3 ist, eine zweite Schicht ein auf die Grundierung aufgebrachter Kleber 4, eine dritte Schicht eine Glasgewebeschicht 5, eine vierte Schicht eine glattgeschliffene Spachtelmasse 6, eine fünfte Schicht ein Primer 7 und eine sechste Schicht ein Schlussanstrich 8.

Die Grundierung 3 ist eine Haftgrundierung, insbesondere eine lösungsmittelfreie Einkomponenten-Acryl-Haftgrundierung. Der Kleber 4 ist in vorteilhafter Weise ein lösungsmittelfreier Glasgewebekleber. Die Glasgewebeschicht 5 besteht aus gewebtem Glasgewebe mit einem Flächengewicht im Bereich zwischen 100 g/m² und 400 g/m². Bei der Spachtelmasse 6 handelt es sich um eine lösungsmittelfreie Zweikomponenten-Epoxy-Spachtelmasse. Der Primer 7 ist ein lösungsmittelfreier Zweikomponenten-PU-Voranstrich. Bei dem Schlussanstrich 8 handelt es sich um einen lösungsmittelfreien Zweikomponenten-PU-Anstrich.

Durch eine Verwendung einer lösungsmittelfreien Zweikomponenten-Beschichtung wird in vorteilhafter Weise erreicht, dass das Gesamtsystem sehr gute Chemikalien- und Desinfektionsmittelbeständigkeit sowie eine hohe mechanische Festigkeit aufweist und gleichzeitig eine glatte Oberfläche ausbildet.

## Patentansprüche

1. Verfahren zum Aufbringen einer Beschichtung auf eine zu beschichtende Fläche mit folgenden Schritten:
S1: Grundieren der zu beschichtenden Fläche mit einer Haftgrundierung,
S2: Aufbringen eines Klebers auf die grundierte Fläche,
S3: Einlegen von Glasgewebe in den aufgebrachten Kleber,
S4: Trocknen des Glasgewebes und des Klebers,
S5: Glattspachteln des getrockneten Glasgewebes mit einer lösungsmittelfreien Zweikomponenten-Epoxy-Spachtelmasse,
S6: Glattschleifen der Spachtelmasse,
S7: Aufbringen eines Primers, bei dem es sich um einen lösungsmittelfreien Zweikomponenten-PU-Voranstrich handelt, auf die geschliffene Spachtelmasse,
SB: Überstreichen des Primers mit einem Schlussanstrich, bei dem es sich um einen lösungsmittelfreien Zweikomponenten-PU-Anstrich handelt.

2. Verfahren nach Anspruch 1, **dadurch gekennzeichnet, dass** die zu beschichtende Fläche eine Zimmerwand oder eine Zimmerdecke ist.

3. Verfahren nach Anspruch 1 oder 2 **dadurch ge- kennzeichnet,** dass beim Grundieren auf die zu beschichtende Fläche eine lösungsmittelfreie Einkomponenten-Acryl-Haftgrundierung aufgebracht wird.

4. Verfahren nach einem der vorhergehenden Ansprüche, **dadurch gekennzeichnet, dass** auf die grundierte Fläche ein lösungsmittelfreier Glasgewebekleber aufgebracht wird.

5. Verfahren nach einem der vorhergehenden Ansprüche, **dadurch gekennzeichnet, dass** in den aufgebrachten Kleber ein gewebtes Glasgewebe mit einem Flächengewicht im Bereich von 100 g/m² bis 400 g/m² eingelegt wird.

6. Verfahren nach einem der vorhergehenden Ansprüche, **dadurch gekennzeichnet, dass** das Glattschleifen mittels eines Vibrationsschleifers oder eines Exzenterschleifers vorgenommen wird.

7. Verfahren nach einem der vorhergehenden Ansprüche, **dadurch gekennzeichnet, dass** das Überstreichen des Primers mittels eines zweimaligen Auftragens eines lösungsmittelfreien Zweikomponenten-PU-Anstrichs vorgenommen wird.

8. Beschichtung mit einer Mehrzahl von Schichten, von denen eine erste Schicht eine Haftgrundierung (3), eine zweite Schicht ein auf die Haftgrundierung aufgebrachter Kleber (4), eine dritte Schicht eine Glasgewebeschicht (5), eine vierte Schicht eine glattgeschliffene lösungsmittelfreie Zweikomponenten-Epoxy-Spachtelmasse (6), eine fünfte Schicht ein Primer (7), bei dem es sich um einen lösungsmittelfreien Zweikomponenten-PU-Voranstrich handelt, und eine sechste Schicht ein Schlussanstrich (8), bei dem es sich um einen lösungsmittelfreien Zweikomponenten-PU-Anstrich handelt, ist.

9. Beschichtung nach Anspruch 8, **dadurch gekennzeichnet, dass** die Haftgrundierung eine lösungsmittelfreie Einkomponenten-Acryl-Haftgrundierung ist.

10. Beschichtung nach Anspruch 8 oder 9, **dadurch gekennzeichnet, dass** der Kleber ein lösungsmittelfreier Glasgewebekleber ist.

11. Beschichtung nach einem der Ansprüche 8 - 10, **dadurch gekennzeichnet, dass** die Glasgewebeschicht gewebtes Glasgewebe mit einem Flächengewicht im Bereich von 100 g/m² bis 400 g/m² ist.

## Claims

1. Method of applying a coating to a surface to be coated, comprising the following steps:
S1: priming the surface, which is to be coated, with an adhesive priming,
S2: applying an adhesive to the primed surface,
S3: placing glass fibre in the applied adhesive,
S4: drying the glass fibre and the adhesive,
S5: smoothing the dried glass fibre with a solvent-free, two-component epoxy filler,
S6: grinding smooth the filler,
S7: applying a primer to the ground filler, the primer being a solvent-free two-component polyurethane precoat, and
S8: topcoating the primer with a final coat, the final coat being a solvent-free two-component polyurethane coat.

2. Method according to claim 1, **characterised in that** the surface to be coated is a room wall or a room ceiling.

3. Method according to claim 1 or 2, **characterised in that** for the priming of the surface to be coated a solvent-free single-component acryl adhesive priming is applied.

4. Method according to any one of the preceding claims, **characterised in that** a solvent-free glass-fibre adhesive is applied to the primed surface.

5. Method according to any one of the preceding claims, **characterised in that** a woven glass fibre with an area weight in the region of 100g/m² to 400 g/m² is placed in the applied adhesive.

6. Method according to any one of the preceding claims, **characterised in that** the grinding smooth is carried out by means of a power sander or a random orbital sander.

7. Method according to any one of the preceding claims, **characterised in that** the topcoating of the primer is carried out by means of a double-application of a solvent-free two-component polyurethane coat.

8. Coating with a plurality of layers, of which a first layer is an adhesive priming (3), a second layer is an adhesive (4) applied to the adhesive priming, a third layer is a glass fibre layer (5), a fourth layer is a ground-smooth solvent-free two-component epoxy filler (6), a fifth layer is a primer (7), the primer being a solvent-free two-component polyurethane precoat, and a sixth layer is a final coat (8), the final coat being a solvent-free two-component polyurethane coat.

9. Coating according to claim 8, **characterised in that** the adhesive priming is a solvent-free single-component acryl adhesive priming.

10. Coating according to claim 8 or 9, **characterised in that** the adhesive is a solvent-free glass-fibre adhesive.

11. Coating according to any one of claims 8 to 10, **characterised in that** the glass-fibre layer is a woven glass fibre with an area weight in the region of 100 g/m² to 400 g/m².

## Revendications

1. Procédé servant à appliquer un revêtement sur une surface à revêtir, comprenant les étapes suivantes consistant à :
S1 : apprêter la surface à revêtir avec un apprêt d'adhérence ;
S2 : appliquer une colle sur la surface apprêtée ;
S3 : introduire du tissu de verre dans la colle appliquée ;
S4 : sécher le tissu de verre et la colle ;
S5 : enduire le tissu de verre séché d'un enduit époxy à deux composants sans solvant ;
S6 : poncer l'enduit ;
S7: appliquer sur l'enduit poncé un primaire, qui est une couche primaire polyuréthane à deux composants sans solvant ;
S8 : recouvrir le primaire d'une couche de peinture de finition, laquelle est une couche de peinture polyuréthane à deux composants sans solvant.

2. Procédé selon la revendication 1, **caractérisé en ce que** la surface à revêtir est un mur ou un plafond d'une pièce.

3. Procédé selon la revendication 1 ou 2, **caractérisé en ce qu'**un apprêt d'adhérence acrylique à un composant sans solvant est appliqué lors de l'apprêt de la surface à revêtir.

4. Procédé selon l'une quelconque des revendications précédentes, **caractérisé en ce qu'**une colle pour tissu de verre sans solvant est appliquée sur la surface apprêtée.

5. Procédé selon l'une quelconque des revendications précédentes, **caractérisé en ce qu'**un tissu de verre tissé présentant un poids surfacique situé dans la plage allant de 100 g/m² à 400 g/m² est introduit dans la colle appliquée.

6. Procédé selon l'une quelconque des revendications précédentes, **caractérisé en ce que** le ponçage est effectué au moyen d'une ponceuse vibrante ou d'une ponceuse excentrique.

7. Procédé selon l'une quelconque des revendications précédentes, **caractérisé en ce que** le recouvrement du primaire est effectué au moyen d'une application en deux couches d'une couche de peinture polyuréthane à deux composants sans solvant.

8. Revêtement comprenant une pluralité de couches, parmi lesquelles une première couche est un apprêt d'adhérence (3), une deuxième couche est une colle (4) appliquée sur l'apprêt d'adhérence, une troisième couche est une couche de tissu de verre (5), une quatrième couche est un enduit (6) époxy à deux composants sans solvant poncé, une cinquième couche est un primaire (7) qui est une couche primaire polyuréthane à deux composants sans solvant, et une sixième couche est une couche de peinture de finition (8) qui est une couche de peinture polyuréthane à deux composants sans solvant.

9. Revêtement selon la revendication 8, **caractérisé en ce que** l'apprêt d'adhérence est un apprêt d'adhérence acrylique à un composant sans solvant.

10. Revêtement selon la revendication 8 ou 9, **caractérisé en ce que** la colle est une colle pour tissu de verre sans solvant.

11. Revêtement selon l'une quelconque des revendications 8 à 10, **caractérisé en ce que** la couche de tissu de verre est un tissage de tissu de verre présentant un poids surfacique situé dans la plage allant de 100 g/m² à 400 g/m².
